# FASCICULE DE BREVET EUROPEEN

(11) **EP 2 523 284 B1**
(45) Date de publication et mention de la délivrance du brevet: **08.01.2014**
(21) Numéro de dépôt: 12290111.9
(22) Date de dépôt: 29.03.2012
(51) Int. Cl.: H02G 3/18

(54) **Support d'appareillage à griffe escamotable sous l'action d'u écrou pivotant, appareillage électrique comprenant un tel support**
Gerätehalterung mit versenkbarem Haken unter der Einwirkung einer Schwenkmutter, und Elektrogerät mit einer solchen Halterung
Appliance mounting with a prong that can retract under the action of a pivoting nut, electrical appliance including such a mounting

(30) Priorité: 13.05.2011 FR 1101465
(43) Date de publication de la demande: 14.11.2012
(73) Titulaire: Legrand France, 87000 Limoges (FR); Legrand SNC, 87000 Limoges (FR)
(72) Inventeur: Hegedus, Bence, 5900 Oroshaza (HU); Lequeux, Christophe, 87220 Boisseuil (FR)
(74) Mandataire: Orsini, Fabienne

(56) Documents cités:
- WO-A1-2009/027469
- DE-B1- 1 665 158
- DE-U- 7 327 221
- FR-A1- 2 856 202

## Description

La présente invention concerne de manière générale le domaine des appareillages électriques à encastrer.

Elle concerne plus particulièrement un support d'appareillage électrique comprenant :
- un cadre qui comprend une rampe,
- une vis présentant un corps fileté d'axe longitudinal A1 engagé au travers d'une ouverture prévue dans ledit cadre,
- une griffe articulée autour d'un axe fixe par rapport au cadre pour basculer par rapport à ce dernier entre une position escamotée et une position déployée, et
- un écrou vissé sur ledit corps fileté et agencé pour prendre appui contre une face arrière de la griffe lors du vissage de la vis afin de faire basculer ladite griffe depuis sa position escamotée vers sa position déployée.

Elle concerne également un appareillage électrique comprenant un tel support d'appareillage.

### ARRIERE-PLAN TECHNOLOGIQUE

On connaît déjà des documents DE 73 27 221 et FR 2 300 491 un support du type précité qui comprend deux griffes qui interviennent en position diamétralement opposée sur le cadre et qui, sous le contrôle des vis, sont aptes à venir s'ancrer dans la paroi latérale d'une boîte d'encastrement.

En pratique, pour ancrer les griffes dans la paroi latérale de la boîte d'encastrement, l'installateur visse les vis pour faire remonter les écrous le long de leurs corps filetés, ce qui provoque le basculement des griffes depuis leur position escamotée dans laquelle elles sont rétractées pour ne pas interférer avec la boîte d'encastrement lors de la mise en place du support d'appareillage sur cette boîte, jusqu'à leur position déployée.

Pour faciliter le démontage et l'extraction du support d'appareillage électrique, il est prévu selon le document EP 1 710 881 d'équiper le support d'appareillage électrique de moyens de rappel élastique des griffes en position escamotée.

Ces moyens de rappel élastique comportent des lames-ressort qui présentent chacune une extrémité de montage fixée au cadre et une extrémité d'actionnement en appui contre la griffe correspondante. Ainsi, lorsque l'installateur visse les vis, le basculement des griffes provoque la déformation élastique des lames-ressort. Lorsque l'installateur dévisse les vis, les lames-ressort sous tension reviennent à leur état de repos et ramènent les griffes en position escamotée.

L'inconvénient d'un tel support d'appareillage est que, lorsque ses griffes sont déployées pour s'ancrer à la paroi latérale de la boîte d'encastrement, elles maintiennent sous tension les lames-ressort dans leur état déformé élastiquement, qui sont dès lors inévitablement sujettes au vieillissement, ce qui réduit leur efficacité dans le temps et ce qui, à terme, peut provoquer leur rupture.

La déformation de ces lames-ressort, lors de l'installation du support d'appareillage sur la boîte d'encastrement, génère en outre un effort résistant que l'installateur doit vaincre lorsqu'il visse les vis, au détriment de la facilité d'installation du support d'appareillage.

Un autre inconvénient de ce support est que son assemblage, dans un processus automatisé de fabrication d'appareillages électriques est onéreux car difficile à réaliser, du fait notamment du nombre élevé de pièces à assembler.

On connaît également des documents DE 27 57 267 et EP 2 193 583, des supports d'appareillage électrique du type précité, dans lesquels les écrous et les griffes sont agencés pour coopérer ensemble lors du dévissage de la vis par l'installateur afin de provoquer le basculement de la griffe depuis sa position déployée vers sa position escamotée.

Plus particulièrement, selon le document DE 27 57 267, chaque écrou comprend, d'une part, une partie inférieure qui s'étend en dessous d'une paroi principale de la griffe, et, d'autre part, une partie supérieure, présentant un pan biseauté, qui s'étend au-dessus de la paroi principale de la griffe. Ici, de manière classique, le vissage de la vis provoque la remontée de l'écrou. Lors de cette remontée, la partie inférieure de l'écrou agit sur la paroi principale de la griffe pour la faire basculer vers sa position déployée. Le dévissage de la vis provoque la descente de l'écrou. Lors de cette descente, le pan biseauté de la partie supérieure de l'écrou prend appui contre la face supérieure de la paroi principale de la griffe pour la faire basculer vers sa position escamotée.

Selon le document EP 2 193 583, la griffe comporte une saillie ou protubérance avec laquelle l'écrou coopère exclusivement pour ramener cette griffe en position rétractée lors du dévissage de la vis.

Dans les systèmes précités pour rappeler la griffe en position escamotée lors du dévissage de la vis, la griffe ou l'écrou est complexe à réaliser. L'assemblage de la griffe et de l'écrou qui sont deux pièces en mouvement demande un bon ajustement pour que leur coopération fonctionne. Ainsi, la fabrication de chacune de ces pièces et leur assemblage augmentent le prix de fabrication du support d'appareillage électrique.

### OBJET DE L'INVENTION

Afin de remédier aux inconvénients précités de l'état de la technique, la présente invention propose un support d'appareillage électrique tel que défini dans la revendication 1.

Ainsi, avantageusement, dans le support d'appareillage électrique conforme à l'invention, l'écrou coopère avec une partie fixe du support pour pousser la griffe vers sa position escamotée, lors du dévissage de la vis, ce qui est plus simple à réaliser et ce qui plus fiable en fonctionnement.

D'autres caractéristiques non limitatives et avantageuses du support d'appareillage électrique conforme à l'invention sont énoncées dans les revendications 2 à 11.

L'invention propose également un appareillage électrique comportant un support d'appareillage électrique conforme à l'invention qui supporte au moins un mécanisme d'appareillage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un mode de réalisation préférentiel du support d'appareillage électrique selon l'invention ;
- la figure 2 est une vue de dessus de la figure 3 ;
- la figure 3 est une vue schématique en perspective assemblée du support de la figure 1 avec ses griffes en position escamotée ;
- la figure 4 est une vue de détail d'un des deux ensembles à griffe de la figure 3 ;
- la figure 5 est une vue schématique en perspective assemblée du support de la figure 1 avec ses griffes en position déployée ;
- la figure 6 est une vue de détail d'un des deux ensembles à griffe de la figure 5 ; et
- les figures 7A à 7C sont des vues en coupe selon le plan A-A du support d'appareillage électrique de la figure 2, sur lesquelles les griffes sont respectivement représentées en position escamotée, intermédiaire, et déployée.

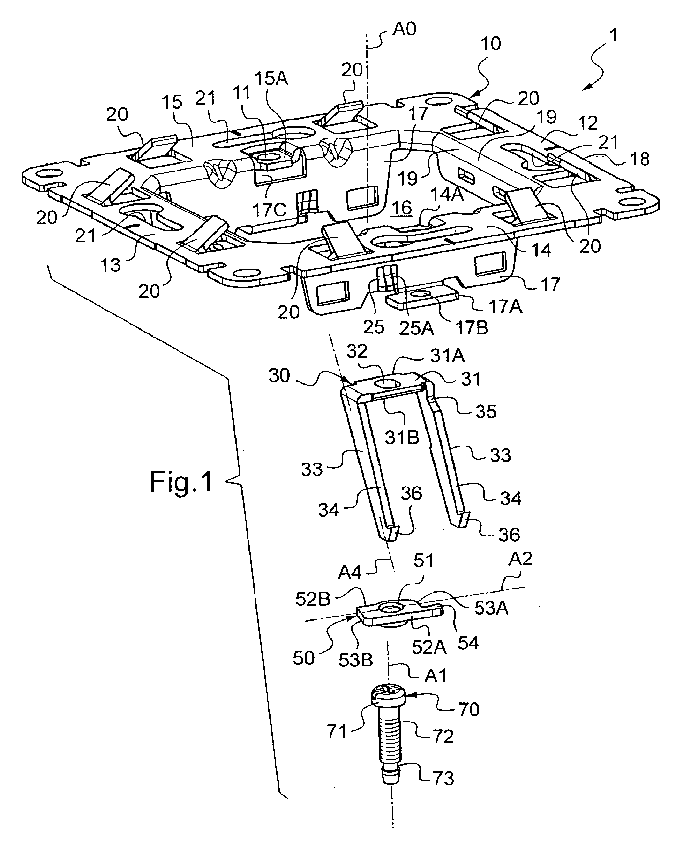

Sur la figure 1, on a représenté schématiquement un support d'appareillage électrique 1 adapté à être monté sur une boîte d'encastrement (non représentée) placée dans une cavité pratiquée dans une paroi.

Dans la suite de la description, les termes « avant » et « arrière » désigneront alors respectivement le lieu tourné vers l'installateur du support d'appareillage électrique 1 sur la boîte d'encastrement et le lieu tourné vers le fond de la cavité pratiquée dans la paroi.

Les termes « intérieur » et « extérieur » désigneront quant à eux respectivement le lieu tourné vers le centre du support d'appareillage électrique 1 et le lieu tourné à l'opposé.

Le support d'appareillage électrique 1 sert au montage à l'intérieur de la boîte d'encastrement d'un ou plusieurs mécanismes d'appareillage, par exemple un mécanisme d'interrupteur, de prise de courant, de prise de téléphone ou encore de disjoncteur.

Il est destiné à être recouvert par une plaque de façade (non représentée sur les figures) en forme de cadre, de telle manière que le bord intérieur de cette plaque de façade borde chaque mécanisme d'appareillage (non représenté) et que le bord extérieur de cette plaque de façade s'appuie sur la paroi d'encastrement.

Tel que représenté sur la figure 1, le support d'appareillage électrique 1 comporte un cadre 10 de forme carrée, venu de formation à partir d'un feuillard métallique découpé et plié à la forme souhaitée.

Selon une variante non représentée, il pourrait être réalisé en matière plastique moulée. Il pourrait également présenter une forme rectangulaire pour le montage et le support d'une pluralité de mécanismes d'appareillage.

Ce cadre 10 comporte quatre branches 12, 13, 14, 15 planes, et est défini entre un bord périphérique extérieur 18 et un bord périphérique intérieur 19 qui délimite une ouverture centrale 16 également de forme carrée. L'axe de ce cadre 10, qui est défini comme l'axe qui passe au centre de cette ouverture centrale 16 et qui est orthogonal aux branches 12, 13, 14, 15, est appelé axe A0.

Ce cadre 10 comporte en outre deux flancs 17 plats parallèles qui s'étendent à partir de deux branches 14, 15 du cadre 10, vers l'arrière du cadre 10, parallèlement à l'axe A0. Les deux flancs 17 s'étendent le long de deux côtés opposés du bord périphérique intérieur 19 du cadre 10. Ces deux flancs 17 sont issus de la matière découpée pour former l'ouverture centrale 16, et sont repliés à angle droit par rapport aux branches 14, 15 qu'ils bordent. Ils s'étendent ici à partir d'une partie centrale des bords intérieurs des branches 14, 15.

Chacune des quatre branches 12, 13, 14, 15 du cadre 10 comporte des moyens de clippage 20 permettant d'encliqueter la plaque de façade sur le support d'appareillage électrique 1. Ces moyens de clippage se présentent ici sous la forme de languettes inclinées par rapport aux branches 12, 13, 14, 15 du cadre 10.

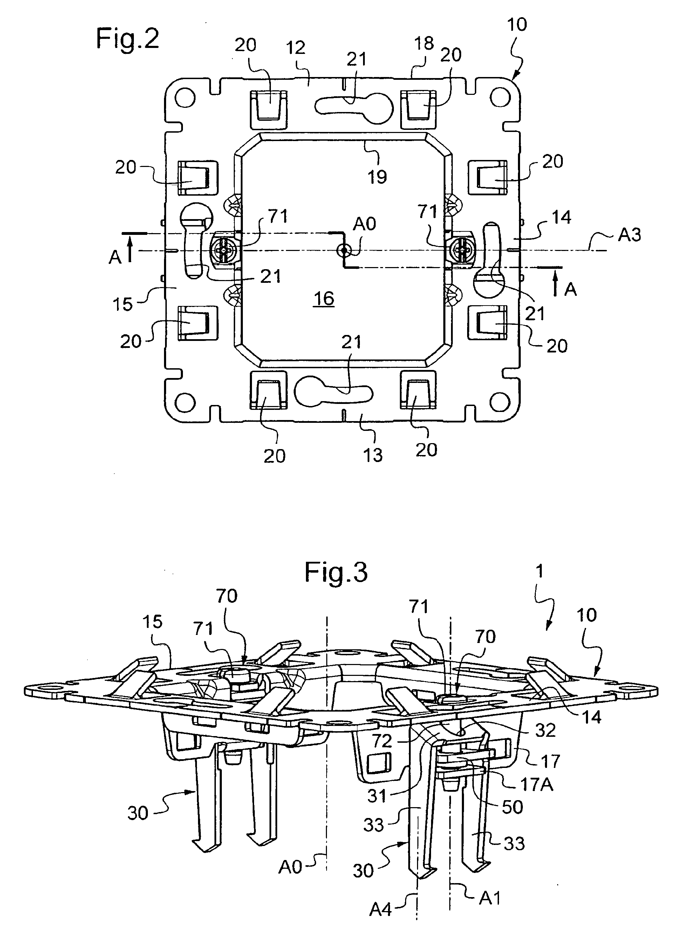

Comme on peut le voir sur les figures 1 et 2, le support d'appareillage électrique 1 comporte en outre des premiers et des seconds moyens d'assujettissement propres à permettre sa fixation à la boîte d'encastrement.

Les premiers moyens d'assujettissement comprennent classiquement, dans chacune des quatre branches 12, 13, 14, 15 du cadre 10, à mi-longueur, un perçage 21 en forme de trou de serrure qui permet le passage du corps fileté d'une vis de fixation (non représentée) destiné à être vissé dans un puits de vissage correspondant de la boîte d'encastrement.

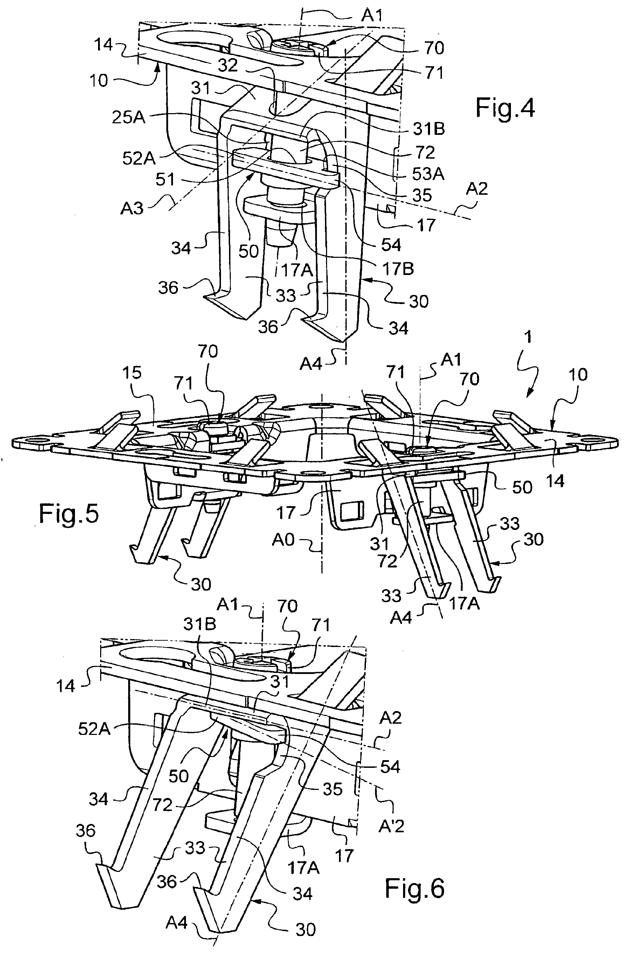

Les seconds moyens d'assujettissement comprennent quant à eux deux ensembles de griffe qui interviennent en position diamétralement opposée sur le cadre 10, de part et d'autre de ses deux flancs 17 (figures 3 et 5).

Chaque ensemble comporte une griffe 30 qui, sous l'action d'un écrou 50 commandé par une vis 70, est apte à venir s'ancrer dans la paroi latérale de la boîte d'encastrement.

La vis 70 ici utilisée comporte classiquement une tête 71 qui présente une empreinte cruciforme, et un corps fileté 72 qui s'étend suivant un axe longitudinal A1 appelé dans la suite de la description l'axe de vissage A1.

Comme le montrent les figures 3 et 5, le corps fileté 72 de la vis 70 est engagé au travers d'une ouverture prévue dans l'une des branches 14, 15 parallèles du cadre 10, de telle sorte que la face arrière de la tête 71 de chaque vis 70 repose sur la branche 14, 15 correspondante du cadre 10.

Comme le montre plus particulièrement la figure 1, chaque branche 14, 15 comporte, localement, à mi-longueur, un renfoncement 14A, 15A, au fond duquel est percée l'ouverture 11 d'accueil du corps fileté 72 de chaque vis 70. Chaque renfoncement 14A, 15A loge partiellement la tête 71 de la vis 70 engagée au travers de l'ouverture 11 de sorte que ladite tête 71 ne forme pas une saillie trop importante à l'avant du support d'appareillage électrique 1.

La vis 70 comporte avantageusement des moyens de retenue 73 adaptés à coopérer avec le cadre 10 de manière à être retenue vers l'avant et vers l'arrière du cadre 10.

Selon le mode de réalisation représenté sur les figures, la vis 70 présente, du côté de l'extrémité libre de son corps fileté 72, une gorge périphérique 73.

Comme le montrent plus particulièrement les figures 1 et 4, le cadre 10 comporte, à l'extrémité arrière de chaque flanc 17, un retour 17A qui est replié à angle droit vers l'extérieur du support d'appareillage électrique 1, de telle sorte qu'il se positionne en regard de la branche 14, 15 correspondante du cadre 10. Chaque retour 17A présente une ouverture 17B, coaxiale avec l'ouverture 11 prévue dans la branche 14, 15 correspondante du cadre 10, au travers de laquelle est engagé le corps fileté 72 de la vis 70.

L'ouverture 17B présente la forme de trou de serrure, avec une partie arrondie par laquelle le corps fileté 72 de la vis 70 pourra être engagé, et une partie oblongue, de largeur sensiblement égale au diamètre de l'extrémité du corps fileté 72 pris au niveau de la gorge périphérique 73, dans laquelle la gorge périphérique 73 de la vis 70 sera engagée. Cette gorge périphérique 73 permet ainsi de retenir la vis 70 par rapport au cadre 10 suivant l'axe de vissage A1.

Comme le montrent les figures 1, et 3 à 6, la griffe 30 présente une forme en U avec une paroi principale 31 à partir de laquelle s'étendent en oblique deux jambages 33 agencés pour s'ancrer dans la paroi latérale de la boîte d'encastrement.

La griffe 30 est issue d'une opération de découpe et de pliage d'un feuillard métallique brut. Elle est donc de fabrication peu onéreuse.

La paroi principale 31 est plane et rectangulaire. Elle s'étend en longueur suivant un axe longitudinal A2 et en largeur suivant un axe transversal A3, perpendiculaire à l'axe longitudinal A2 (figures 1 et 2).

La paroi principale 31 de la griffe 30 présente un orifice central 32 par lequel elle est enfilée sur le corps fileté 72 de la vis 70, entre l'écrou 50 et la face arrière de la branche 14, 15 correspondante du cadre 10.

Les deux jambages 33 de la griffe 30 sont plats et s'étendent dans des plans orthogonaux au plan de la paroi principale 31, suivant des axes A4 inclinés à environ 60 degrés par rapport à l'axe transversal A3.

Ils présentent chacun, à proximité de leur extrémité libre, une dent pointue 36 qui est orientée vers l'extérieur du support d'appareillage électrique 1 et qui est adaptée à s'ancrer dans la paroi latérale d'une boîte d'encastrement.

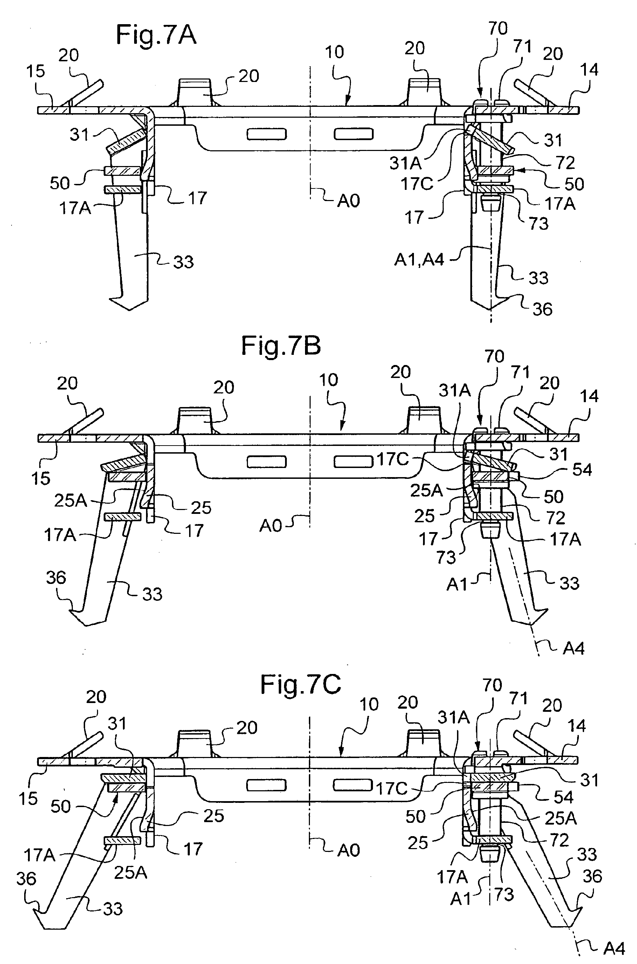

Comme le montrent les figures 7A à 7C, la paroi principale 31 de la griffe 30 est articulée autour d'un axe fixe sur le flanc 17 correspondant du cadre 10 de telle sorte que la griffe 30 est libre de basculer entre une position escamotée (figure 7A) et une position déployée (figure 7C).

A cet effet, le bord intérieur de cette paroi principale 31, qui est tourné vers le flanc 17 du cadre 10, présente deux découpes qui délimitent entre elles une languette 31A allongée suivant un axe parallèle à l'axe longitudinal A2 (figure 1).

Comme le montre la figure 1, chaque flanc 17 du cadre 10 comporte en correspondance une fenêtre 17C dans laquelle la languette 31A de la paroi principale 31 de la griffe 30 est engagée.

Chaque fenêtre 17C présente une longueur ajustée à la longueur de la languette 31A de la griffe 30 et une hauteur légèrement supérieure à l'épaisseur de la paroi principale 31 de la griffe 30 (voir figures 7A à 7C). Ainsi, chaque griffe 30 est libre de basculer entre sa position escamotée (figure 7A) et sa position déployée (figure 7C), autour d'un axe fixe parallèle à l'axe longitudinal de la branche 14, 15 correspondante. Elle est en outre retenue en position axiale par rapport au cadre 10, suivant l'axe de vissage A1.

Tel que représenté sur la figure 4, l'orifice 32 prévu dans la paroi principale 31 de la griffe 30 présente une forme oblongue, et est allongé suivant l'axe transversal A3. Grâce à sa forme, cet orifice 31 laisse la griffe 30 pivoter par rapport au corps fileté 72 de la vis 70.

L'écrou 50, situé entre les deux jambages 33 de la griffe 30, est vissé sur le corps fileté 72 de la vis 70. Il est agencé pour prendre appui contre la face arrière de la paroi principale 31 de la griffe 30, lors du vissage de la vis 70 afin de faire basculer ladite griffe 30 depuis sa position escamotée vers sa position déployée (figures 7A à 7C).

Le vissage de la vis 70 provoque ainsi la remontée de l'écrou 50 qui force la griffe 30 à basculer en position déployée.

Comme le montre la figure 1, l'écrou 50 se présente sous la forme d'une plaquette rectangulaire qui s'étend en regard de la paroi principale 31 de la griffe 30. Cette plaquette comprend deux bords longitudinaux avant 52A et arrière 52B qui s'étendent globalement en parallèle, d'un jambage 33 à l'autre de la griffe 30. La plaquette comprend deux bords latéraux 53A, 53B, transversaux auxdits bords longitudinaux 52A, 52B, qui s'étendent le long de la largeur desdits jambages 33 de la griffe 30. L'écrou 50 comporte en son centre un alésage taraudé 51 en prise avec le corps fileté 72 de la vis 70 (figure 4). Enfin, l'écrou 50 comporte dans le prolongement de son bord longitudinal avant 52A, un ergot 54 qui fait sailli d'un bord latéral 53A (voir figure 1).

Selon l'invention, le cadre 10 et l'écrou 50 de chaque ensemble de griffe sont conçus de telle sorte que le dévissage de la vis 70 provoque le retour de la griffe 30 en position escamotée.

Plus particulièrement, le cadre 10 comporte une rampe 25A et l'écrou 50 est agencé pour glisser sur cette rampe 25A lors du dévissage de la vis 70 de sorte que ledit écrou 50 est forcé à pivoter depuis une position initiale (figure 6) autour de l'axe longitudinal A1 de la vis 70 suivant un premier sens de rotation pour pousser ladite griffe 30 depuis sa position déployée vers sa position escamotée (figure 4).

Avantageusement, la griffe 30 comporte une autre rampe 35 et l'écrou 50 est agencé pour glisser sur cette autre rampe 35 lors du vissage de la vis 70 de sorte que ledit écrou 50 est forcé à pivoter autour de l'axe longitudinal A1 de la vis 70 suivant un sens de rotation inverse au premier sens de rotation pour revenir dans sa position initiale.

Les deux rampes 25A, 35 prévues respectivement sur le cadre 10 et sur la griffe 30, forment des butées qui limitent la course de pivotement de l'écrou 50.

Ainsi, l'écrou 50 est vissé sur le corps fileté 51 de la vis 50 et est monté de telle manière que, lors du vissage et du dévissage de la vis 70, il est libre de se translater vers l'avant et vers l'arrière du cadre 10 tout en étant bloqué en rotation autour de l'axe de vissage A1 par les rampes 25A, 35 du cadre 10 et de la griffe 30.

Selon le mode de réalisation de l'invention représentée sur les figures 1, 7A à 7C, chaque flanc 17 du cadre 10 comporte en saillie de sa face extérieure tournée vers l'écrou 50, un pan incliné 25A qui forme ladite rampe. Ce pan incliné 25A est ici constitué par la face avant d'une languette 25 formée (par découpage) dans ledit flanc 17.

Le bord longitudinal arrière 52B de l'écrou 50 est adapté à glisser sur ledit pan incliné 25A.

Par ailleurs, l'écrou 50 est situé entre les jambages 33 de la griffe 30 de sorte que son ergot 54 s'étend en regard de la tranche extérieure 34 d'un des jambages 33. Ce jambage 33 comporte dans sa tranche extérieure 34 un renfoncement 35 au fond duquel prend appui l'ergot 54 de l'écrou 50. Le fond du renfoncement 35 est incliné et forme l'autre rampe contre laquelle est adapté à glisser l'écrou 50.

Ainsi, l'écrou 50 est dissymétrique tout comme la griffe 30 car l'autre jambage 33 de ladite griffe 30 présente une tranche extérieure 34 droite (figure 4).

La fixation du support d'appareillage électrique 1 sur la boîte d'encastrement est opérée de la manière suivante.

Initialement, le support d'appareillage électrique 1 est livré avec un mécanisme d'appareillage déjà encliqueté sur le cadre 10 et avec ses griffes 30 en position escamotée (figures 3, 4 et 7A).

En position escamotée, les axes A4 des jambages 33 de la griffe 30 s'étendent parallèlement au flanc 17 du cadre 10, de telle sorte que les dents pointues 36 ne forment pas obstacle à l'engagement du support d'appareillage électrique 1 sur la boîte d'encastrement.

Dans cette position, la paroi principale 31 de la griffe 30 est inclinée d'environ 60 degrés par rapport au flanc 17 du cadre 10.

Le bord longitudinal avant 52A de l'écrou 50 s'étend suivant l'axe A2 parallèlement au bord longitudinal extérieur 31 B de la paroi principale 31 de la griffe 30 (figure 4).

Grâce à la position des griffes 30, l'installateur peut alors directement rapporter cet ensemble (appelé appareillage électrique) sur la boîte d'encastrement, en veillant à ce que les griffes 30 s'engagent bien à l'intérieur de ladite boîte.

Il reste alors à l'installateur à visser chacune des vis 70, de telle sorte que chaque écrou 50 remonte le long de la vis 70.

En remontant, la face avant de chaque écrou 50 prend appui contre la face arrière de la paroi principale 31 de chaque griffe 30 et provoque le basculement de ladite griffe 30 en position déployée. En basculant, la griffe 30 provoque le pivotement vers l'intérieur de l'écrou 50 autour de l'axe de vissage A1. En effet, l'écrou 50 glisse sur le fond du renfoncement 35 du jambage 33 correspondant de la griffe 30 et pivote autour de l'axe A1 (figures 7B et 7C).

Dans cette position déployée représentée sur les figures 5, 6 et 7C, la paroi principale 31 de la griffe 30 s'étend parallèlement aux branches 14, 15 du cadre 10. Dans cette position, les axes A4 des jambages 33 sont inclinés vers l'extérieur d'environ 30 degrés par rapport au flanc 17 du cadre 10, si bien que les dents pointues 36 s'ancrent dans la paroi latérale de la boîte d'encastrement, et retiennent ainsi solidement le support d'appareillage électrique 1 sur ladite boîte.

La plaque de façade enjoliveur peut alors être encliquetée sur le cadre 10 pour recouvrir esthétiquement le support d'appareillage électrique 1.

Le bord longitudinal avant 52A de l'écrou 50 s'étend suivant l'axe A'2 en oblique par rapport au bord longitudinal extérieur 31B de la paroi principale 31 de la griffe 30 qui s'étend suivant l'axe A2 (figure 6).

Le démontage de l'appareillage électrique hors de la boîte d'encastrement est ensuite opéré de la manière suivante.

L'installateur commence par retirer la plaque de façade. Puis, il dévisse chaque vis 70 de telle manière que chaque écrou 50 descende le long de chaque vis 70.

Lors de cette descente, le bord longitudinal arrière 52B de chaque écrou 50 glisse contre chaque pan incliné 25A de chaque flanc 17 du cadre 10, ce qui force ledit écrou 50 à pivoter autour de l'axe A1 vers l'extérieur. L'ergot 54 de l'écrou 50 prend appui contre la tranche extérieure du jambage 33 correspondant de la griffe 30 pour pousser ladite griffe 30 depuis sa position déployée vers sa position escamotée.

La présente invention n'est nullement limitée au mode de réalisation décrit et représenté, mais l'homme du métier saura y apporter toute variante conforme à son esprit.

On pourra prévoir que les moyens de retenue de la vis suivant l'axe de vissage A1 se présentent sous une forme différente.

En particulier, on pourra prévoir que la vis comporte une collerette qui borde sa tête et qui est située à la jonction entre sa tête et son corps fileté.

Pour coopérer avec cette collerette, le cadre présentera une forme particulière au niveau de son ouverture laissant passer le corps fileté de la vis, qui lui permet de prendre la collerette en sandwich afin de la bloquer selon l'axe de vissage A1.

Vue par l'avant, l'ouverture pourra présenter une forme en U qui s'ouvre sur le bord périphérique intérieur du cadre et qui présente une largeur égale, au jeu près, au diamètre de la tête de la vis.

Par conséquent, la tête de la vis peut être engagée latéralement dans cette ouverture de telle manière que la face avant de sa collerette s'applique sur la face arrière de la branche du cadre.

Pour engager latéralement la vis dans cette ouverture, le flanc du cadre présente alors une fente d'axe parallèle à l'axe principal A0, qui communique vers l'avant avec l'ouverture et qui se prolonge vers l'arrière jusqu'à l'extrémité du flanc. Cette fente présente une largeur égale, au jeu près, au diamètre du corps fileté de la vis.

Cette fente est bordée de deux rebords qui sont repliés à angle droit vers l'extérieur du support d'appareillage électrique et qui viennent de formation à partir de la matière découpée pour former la fente.

Les extrémités avant de ces deux rebords sont avantageusement situées sous l'ouverture, pour former une portée pour la face arrière de la tête de la vis.

Ainsi, la collerette de la vis est retenue vers l'avant par la face arrière de la branche, et vers l'arrière par les extrémités avant des deux rebords.

Selon une autre variante de l'invention, on pourra prévoir que l'ouverture prévue dans la paroi principale de la griffe présente un contour non pas fermé, mais au contraire ouvert vers l'extérieur pour faciliter l'assemblage du support d'appareillage électrique.

Encore en variante, on pourra également utiliser une griffe de fixation de forme différente, comportant par exemple un seul jambage.

## Revendications

1. Support d'appareillage électrique (1) comprenant :
- un cadre (10) comportant une rampe (25A),
- une vis (70) présentant un corps fileté (72) d'axe longitudinal A1 engagé au travers d'une ouverture (11) prévue dans ledit cadre,
- une griffe (30) articulée autour d'un axe fixe par rapport au cadre (10) pour basculer par rapport à ce dernier entre une position escamotée et une position déployée, et
- un écrou (50) vissé sur ledit corps fileté (72) et agencé pour prendre appui contre une face arrière de la griffe (30) lors du vissage de la vis afin de faire basculer ladite griffe depuis sa position escamotée vers sa position déployée,
**caractérisé en ce que** l'écrou (50) est agencé pour glisser sur cette rampe lors du dévissage de la vis de sorte que ledit écrou est forcé à pivoter depuis une position initiale autour de l'axe longitudinal A1 suivant un premier sens de rotation pour pousser ladite griffe (30) depuis sa position déployée vers sa position escamotée.

2. Support d'appareillage électrique (1) selon la revendication 1, dans lequel ladite griffe (30) comporte une autre rampe et l'écrou (50) est agencé pour glisser sur cette autre rampe lors du vissage de la vis de sorte que ledit écrou est forcé à pivoter autour de l'axe longitudinal A1 suivant un sens de rotation inverse au premier sens de rotation pour revenir dans sa position initiale.

3. Support d'appareillage électrique (1) selon l'une des revendications 1 et 2, dans lequel les deux rampes prévues respectivement sur le cadre (10) et sur la griffe (30), forment des butées qui limitent la course de pivotement de l'écrou (50).

4. Support d'appareillage électrique (1) selon l'une des revendications précédentes, dans lequel le cadre (10) comporte quatre branches (12,13,14,15) qui délimitent entre elles une ouverture centrale (16) d'axe A0 et au moins un flanc (17) qui s'étend à partir d'une des branches (14), vers l'arrière du cadre, parallèlement à l'axe A0, ledit flanc (17) comportant en saillie de sa face extérieure tournée vers l'écrou, un pan incliné (25A) qui forme ladite rampe.

5. Support d'appareillage électrique (1) selon la revendication précédente, dans lequel ledit pan incliné (25A) est constitué par la face avant d'une languette (25) formée dans ledit flanc (17).

6. Support d'appareillage électrique (1) selon l'une des deux revendications précédentes, dans lequel l'écrou (50) présente un bord longitudinal arrière (52B) adapté à glisser sur ledit pan incliné (25A).

7. Support d'appareillage électrique (1) selon l'une des revendications précédentes, dans lequel la griffe (30) comporte une paroi principale (31) engagée sur le corps fileté (72) de la vis (70), entre le cadre (10) et ledit écrou (50), et deux jambages (33) parallèles qui s'étendent en oblique à partir de la paroi principale (31), et dans lequel ledit écrou (50) est situé entre les deux jambages (33) et il comporte un ergot (54) qui fait sailli d'un bord latéral (53A) pour prendre appui contre la tranche extérieure (34) d'un des deux jambages (33).

8. Support d'appareillage électrique (1) selon la revendication précédente, dans lequel ledit jambage (33) comporte dans sa tranche extérieure (34) un renfoncement (35) au fond duquel prend appui l'ergot (54) de l'écrou (50).

9. Support d'appareillage électrique (1) selon l'une des revendications précédentes, dans lequel il est prévu des moyens de retenue (73, 17B)) de la vis vers l'avant et vers l'arrière du cadre.

10. Support d'appareillage électrique (1) selon l'une des revendications précédentes, dans lequel le cadre (10) comporte, de part et d'autre de son ouverture centrale (16), deux flancs (17) qui s'étendent en parallèle à partir de deux branches (14,15), vers l'arrière du cadre, parallèlement à l'axe A0, chaque flanc (17) comportant en saillie de sa face extérieure un pan incliné qui forme ladite rampe adaptée à coopérer avec un écrou (50), et il est prévu deux vis identiques, deux écrous identiques et deux griffes identiques, qui interviennent en position diamétralement opposée, de part et d'autre des deux flancs du cadre.

11. Support d'appareillage électrique (1) selon l'une des revendications précédentes, dans lequel le cadre (10), la griffe (30), la vis (70), et l'écrou (50) sont chacun réalisés d'une seule pièce.

12. Appareillage électrique comportant un support d'appareillage électrique (1) qui supporte au moins un mécanisme d'appareillage, **caractérisé en ce que** le support d'appareillage électrique (1) est conforme à l'une des revendications précédentes.

## Patentansprüche

1. Halterung für ein elektrisches Gerät (1) mit:
- einem eine Rampe (25A) umfassenden Rahmen (10),
- einer Schraube (70), die in der Längsachse A1 einen Gewindeteil (72) aufweist, der durch eine in diesem Rahmen vorgesehene Öffnung (11) gesteckt wird,
- einer, um eine feste Achse in Bezug zum Rahmen (10) gelenkigen Verbindungsklemme (30), die zwischen einer ein- und einer ausgezogenen Position um diesen Rahmen schwenkbar ist, und
- einer auf den Gewindeteil (72) geschraubten Mutter (50), die angeordnet ist, um auf einer Rückseite der Verbindungsklemme (30) beim Einschrauben der Schraube zum Aufliegen zu kommen, um die Verbindungsklemme von ihrer eingezogenen Position in die ausgezogene Position zu schwenken,
**dadurch gekennzeichnet, dass** die Mutter (50) angeordnet ist, um beim Herausdrehen der Schraube derart auf dieser Rampe zu gleiten, dass die Mutter dazu gezwungen ist, von einer Ausgangsposition aus gemäß einer ersten Drehrichtung um die Längsachse A1 zu schwenken, um die Verbindungsklemme (30) von ihrer ausgezogenen Position in ihre eingezogene Position zu drücken.

2. Halterung für ein elektrisches Gerät (1) nach Anspruch 1, bei der die Verbindungsklemme (30) eine weitere Rampe umfasst und die Mutter (50) angeordnet ist, um beim Eindrehen der Schraube derart auf dieser anderen Rampe zu gleiten, dass die Mutter dazu gezwungen ist, gemäß einer zur ersten Drehrichtung umgekehrten Drehrichtung um die Längsachse A1 zu schwenken, um wieder in ihre Ausgangsposition zurückzukommen.

3. Halterung für ein elektrisches Gerät (1) nach einem der Ansprüche 1 und 2, bei der die jeweils auf dem Rahmen (10) und der Verbindungsklemme (30) vorgesehenen beiden Rampen Anschläge bilden, die den Schwenkweg der Mutter (50) einschränken.

4. Halterung für ein elektrisches Gerät (1) nach einem der vorausgehenden Ansprüche, bei der der Rahmen (10) vier Seiten (12, 13, 14, 15) umfasst, die untereinander eine zentrale Achsenöffnung A0 (16) abgrenzen und mindestens eine Flanke (17), die sich von einer dieser Seiten (14) aus zur Rückseite des Rahmens und parallel zur Achse A0 erstreckt, wobei diese Flanke (17) von ihrer zur Mutter gerichteten Außenseite aus überstehend eine geneigte Seitenfläche (25A) umfasst, die die besagte Rampe bildet.

5. Halterung für ein elektrisches Gerät (1) nach vorausgehendem Anspruch, bei der die geneigte Seitenfläche (25A) aus der Vorderseite eines in die Flanke (17) eingearbeiteten Flachsteckers (25) besteht.

6. Halterung für ein elektrisches Gerät (1) nach einem der zwei vorausgehenden Ansprüche, bei der die Mutter (50) einen hinteren länglichen Rand (52B) aufweist, der über die geneigte Seitenfläche (25A) gleiten kann.

7. Halterung für ein elektrisches Gerät (1) nach einem der vorausgehenden Ansprüche, bei der die Verbindungsklemme (30) eine auf den Gewindeteil (72) der Schraube (70), zwischen dem Rahmen (10) und der Mutter (50), eingreifende Hauptwand (31) und zwei parallele Stützbeine (33) umfasst, die sich ausgehend von der Hauptwand (31) schräg erstrecken, und bei der sich die Mutter (50) zwischen diesen beiden Stützbeinen (33) befindet und einen Zacken (54) aufweist, der an einem seitlichem Rand (53A) hervorsteht, um am Außenrand (34) eines der beiden Stützbeine (33) zum Aufliegen zu kommen.

8. Halterung für ein elektrisches Gerät (1) nach vorausgehendem Anspruch, bei der das Stützbein (33) an seinem Außenrand (34) eine Vertiefung (35) aufweist, auf deren Grund sich der Zacken (54) der Mutter (50) abstützt.

9. Halterung für ein elektrisches Gerät (1) nach einem der vorausgehenden Ansprüche, bei der Mittel (73, 17B) zum Zurückhalten der Schraube nach vorne und hinten des Rahmens vorgesehen sind.

10. Halterung für ein elektrisches Gerät (1) nach einem der vorausgehenden Ansprüche, bei der der Rahmen (10) auf beiden Seiten seiner zentralen Öffnung (16) zwei Flanken (17) umfasst, die sich ab und parallel zu zwei Seiten (14,15) zur Rückseite des Rahmens und parallel zur Achse A0 erstrecken, wobei jede Flanke (17) ausgehend von ihrer Außenseite und davon abstehend eine geneigte Seitenfläche umfasst, die die Rampe bildet, die mit einer Mutter (50) zusammenwirken kann, und bei der zwei gleiche Schrauben, zwei gleiche Muttern und zwei gleiche Verbindungsklemmen vorgesehen sind, die in entgegengesetzter Position auf beiden Seiten der Flanken des Rahmens zur Wirkung kommen.

11. Halterung für ein elektrisches Gerät (1) nach einem der vorausgehenden Ansprüche, bei der der Rahmen (10), die Verbindungsklemme (30), die Schraube (70) und die Mutter (50) jeweils aus einem einzigen Stück hergestellt sind.

12. Elektrisches Gerät mit einer Halterung für elektrische Geräte (1), die mindestens einen Gerätemechanismus hält, **dadurch gekennzeichnet, dass** die Halterung für ein elektrisches Gerät (1) einem der vorausgehenden Ansprüche entspricht.

## Claims

1. An electrical-equipment support (1) comprising:
· a frame (10) including a ramp (25A);
· a screw (70) presenting a threaded shank (72) of longitudinal axis A1 that is engaged through an opening (11) that is provided in said frame;
· a catch (30) that is hinged about an axis that is stationary relative to the frame (10), so as to tilt relative to said frame between a retracted position and a deployed position; and
· a nut (50) that is screw-fastened on said threaded shank (72) and that is arranged so as to bear against a rear face of the catch (30) while the screw is being tightened, so as to cause said catch to tilt from its retracted position to its deployed position;
the electrical-equipment support being **characterized in that** the nut (50) is arranged so as to slide over the ramp while the screw is being loosened, such that said nut is forced to pivot from an initial position about the longitudinal axis A1 in a first pivot direction, so as to push said catch (30) from its deployed position towards its retracted position.

2. An electrical-equipment support (1) according to claim 1, wherein said catch (30) includes another ramp, and the nut (50) is arranged so as to slide over this other ramp while the screw is being tightened, such that said nut is forced to pivot about the longitudinal axis A1 in a pivot direction that is opposite the first pivot direction, so as to return to its initial position.

3. An electrical-equipment support (1) according to claim 1 or claim 2, wherein the two ramps that are provided on the frame (10) and on the catch (30) respectively, form abutments that limit the pivot stroke of the nut (50).

4. An electrical-equipment support (1) according to any preceding claim, wherein the frame (10) comprises four branches (12, 13, 14, 15) that co-operate with one another to define a central opening (16) of axis A0, and at least one flank (17) that extends from one of the branches (14) towards the rear of the frame, parallel to the axis A0, said flank (17) including, projecting from its outer face facing towards the nut, a slope (25A) that forms said ramp.

5. An electrical-equipment support (1) according to the preceding claim, wherein said slope (25A) is constituted by the front face of a tab (25) that is formed in said flank (17).

6. An electrical-equipment support (1) according to either one of the two preceding claims, wherein the nut (50) presents a rear longitudinal edge (52B) that is adapted to slide over said slope (25A).

7. An electrical-equipment support (1) according to any preceding claim, wherein the catch (30) comprises a main wall (31) that is engaged on the threaded shank (72) of the screw (70) between the frame (10) and said nut (50), and two parallel legs (33) that extend obliquely from the main wall (31), and wherein said nut (50) is situated between the two legs (33) and includes a lug (54) that projects from a side edge (53A) so as to bear against the outer edge (34) of one of the two legs (33).

8. An electrical-equipment support (1) according to the preceding claim, wherein, in its outer edge (34), said leg (33) includes a recess (35) at the bottom of which the lug (54) of the nut (50) bears.

9. An electrical-equipment support (1) according to any preceding claim, wherein holding means (73, 17B) for holding the screw are provided towards the front and towards the rear of the frame.

10. An electrical-equipment support (1) according to any preceding claim, wherein, on either side of its central opening (16), the frame (10) includes two flanks (17) that extend, in parallel, from two branches (14, 15) towards the rear of the frame, parallel to the axis A0, each flank (17) including, projecting from its outer face, a slope that forms said ramp that is adapted to co-operate with a nut (50), and two identical screws, two identical nuts, and two identical catches are provided that are positioned in diametrally-opposite manner on the outsides of the two flanks of the frame.

11. An electrical-equipment support (1) according to any preceding claim, wherein each of the frame (10), the catch (30), the screw (70), and the nut (50) is made as a single piece.

12. Electrical equipment including an electrical-equipment support (1) that supports at least one equipment mechanism, the electrical equipment being **characterized in that** the electrical-equipment support (1) is in accordance with any one of the preceding claims.
